# EUROPÄISCHE PATENTSCHRIFT

(11) **EP 3 853 004 B1**
(45) Veröffentlichungstag und Bekanntmachung des Hinweises auf die Patenterteilung: **17.08.2022**
(21) Anmeldenummer: 19773393.4
(22) Anmeldetag: 19.09.2019
(51) Int. Cl.: B29C 64/129, B29C 64/277, B33Y 10/00, B33Y 40/00, B29C 35/08

(54) **3D-DRUCKER**
3D PRINTER
IMPRIMANTE 3D

(30) Priorität: 21.09.2018 DE 102018123254
(43) Veröffentlichungstag der Anmeldung: 28.07.2021
(73) Patentinhaber: Mühlbauer Technology GmbH, 22547 Hamburg (DE)
(72) Erfinder: TRÄGER, Jens, 25491 Hetlingen (DE)
(74) Vertreter: Glawe, Delfs, Moll
(86) Internationale Anmeldenummer: PCT/EP2019/075107
(87) Internationale Veröffentlichungsnummer: WO 2020/058377

(56) Entgegenhaltungen:
- US-A1- 2018 141 278
- US-A1- 2018 257 297
- US-B1- 8 926 304
- KWAK J ET AL: "High-Power Genuine Ultraviolet Light-Emitting Diodes Based on Colloidal Nanocrystal Quantum Dots", NANO LETTERS, Bd. 15, Nr. 6, 10. Juni 2015 (2015-06-10), Seiten 3793-3799, XP002796286, AMERICAN CHEMICAL SOCIETY USA DOI: 10.1021/ACS.NANOLETT.5B00392

## Beschreibung

Die Erfindung betrifft einen 3D-Drucker.

Im Stand der Technik sind 3D-Drucker diverser Bauarten und für unterschiedliche Druckverfahren bekannt. Ein bekanntes Druckverfahren ist dabei das stereolithografische Verfahren, bei dem eine geeignete flüssige Harz- bzw. Monomerformulierung durch gezieltes Belichten punktweise ausgehärtet wird, um schichtweise ein gewünschtes dreidimensionales Objekt zu erzeugen.

In der klassischen Stereolithografie wird dazu ein fokussierter Laserstrahl über einen um zwei zueinander senkrecht stehende Achsen schwenkbaren Spiegel abgelenkt, um das Harz in den in einer Schicht auszuhärtenden Punkten nacheinander abzufahren und so zu belichten. Insbesondere, wenn größere Flächen ausgehärtet werden sollen, ist dieses Verfahren zeitaufwendig, da auszuhärtenden Flächen punktweise abgefahren, die Flächen durch den Laser also praktisch schraffiert werden müssen. Auch kann es bei größeren Objekten zu Verzerrungen im Randbereich kommen, falls der Laser nur in einem flachen Winkel auf das auszuhärtende Harz auftrifft.

Um das letztgenannte Problem zu reduzieren, offenbart das Dokument US 8,926,304 B1 einen 3D-Drucker mit einem langgestreckten Beleuchtungselement mit aneinandergereihten, einzeln ansteuerbaren Lichtquellen, welches über die selektiv auszuhärtende Schicht rotiert wird. Durch geeignetes Ansteuern der einzelnen Lichtquellen in Abhängigkeit der Winkelstellung des Beleuchtungselements lassen sich besonders Objekte mit gekrümmten Oberflächen gut punktweise drucken.

Als Alternative zur Stereolithografie wurde das sogenannte "Digital Light Processing" (DLP)-Druckverfahren entwickelt. Bei diesem Verfahren wird das Licht einer Lichtquelle über eine digitale Mikrospiegel-Einheit auf das auszuhärtende Harz gelenkt. Die Mikrospiegel-Einheit umfasst dabei eine rechteckige Anordnung von kippbaren Mikrospiegel, die einzelnen an steuerbar sind. Typische Mikrospiegel-Einheiten umfassen 1920 x 1080 einzelnen steuerbare Spiegel, die zwischen einer Position, in der das darauf auftreffende Licht auf einen jeweils vorgegebenen Punkt im Harz hin umgelenkt wird, und einer zweiten Position, in der dies nicht geschieht, verschwenkt werden können. Die Anzahl der individuell aushärtbaren Punkte in einer Schicht des Harzes ist durch die Anzahl der Spiegel der Mikrospiegel-Einheit vorgegeben. Die letztendliche Größe der einzelnen Punkte im Harz kann durch den Abstand zwischen Mikrospiegel-Einheit und der zu belichtenden Schicht beeinflusst werden. Mit größerem Abstand können zwar größere Bauelemente gedruckt werden, die Auflösung nimmt jedoch ab. Auch kann es in den Randbereichen vergleichbar zur Stereolithografie durch nur flach auf das Harz auftreffendes Licht zu Verzerrungen kommen. Dokument US 2018/0141278 A1 offenbart einen auf dem DLP-Prinzip beruhenden 3D-Drucker mit Mikrospiegel-Einheit.

Sowohl bei der klassischen Stereolithografie sowie dem "Digital Light Processing" haben die 3D-Drucker aufgrund der dabei erforderlichen Strahlumlenkung durch schwenkbare Spiegel regelmäßig einen großen Platzbedarf.

Im Stand der Technik sind weiterhin Ausführungsformen bekannt, bei denen anstelle einer durch eine Lichtquelle beleuchteten Mikrospiegel-Einheit ein von einer flächigen Lichtquelle von hinten beleuchtetes LCD-Display verwendet wird, um Harz an gewünschten Punkten auszuhärtenden. Dabei muss das LCD-Display, welches selektiv an einzelnen Punkten das Licht der dahinterliegenden Beleuchtung durchlassen kann, unmittelbar an der Schicht mit den auszuhärtenden Punkten im ansonsten flüssigen Harz angeordnet sein.

Entsprechende LCD-Displays haben den Nachteil, dass aufgrund der dauerhaften großflächigen Beleuchtung von hinten sowie der Absorption deren Lichts an den nicht auszuhärtenden Punkten in einer Schicht zu einer Erwärmung des LCD-Displays führt. Insbesondere da die Wärmeabfuhr aufgrund des unmittelbar an dem LCD-Display anliegenden Harzes beschränkt ist, kann es aufgrund der erhöhten Temperatur zu zeitweisen Fehlfunktionen im LCD-Display kommen, sodass ein Druck fehlschlägt oder zumindest unterbrochen werden muss. Darüber hinaus kann der Prozess des Aushärtens des Harzes durch zu hohe Temperaturen nachteilig beeinflusst werden.

Der Erfindung liegt daher die Aufgabe zugrunde, einen gegenüber diesem Stand der Technik verbesserten 3D-Drucker zu schaffen.

Gelöst wird diese Aufgabe durch einen 3D-Drucker gemäß dem Hauptanspruch. Vorteilhafte Weiterbildungen sind Gegenstand der abhängigen Ansprüche.

Demnach betrifft die Erfindung einen 3D-Drucker umfassend eine ebene Aufbauplatte und ein der Aufbauplatte gegenüberliegendes, parallel dazu angeordnetes Belichtungselement, wobei der Abstand mit Hilfe einer Antriebseinheit einstellbar ist, wobei die Aufbauplatte und/oder das Belichtungselement derart in einem mit Harz gefüllten Reservoir angeordnet ist, dass der an der Aufbauplatte angrenzende Bereich zwischen Aufbauplatte und Belichtungselement von dem Harz im Reservoir eingenommen wird, und wobei das Belichtungselement als zweidimensionale Matrix aus dicht nebeneinanderliegenden, einzeln ansteuerbaren Quantenpunkt-Leuchtdioden ist.

Die Erfindung hat erkannt, dass ausgehend von dem eingangs genannten Stand der Technik die Verwendung von einem Belichtungselement mit selbstleuchtenden Belichtungspunkten vorteilhaft ist. Gegenüber der klassischen und langsamen Stereolithografie sowie dem "Digital Light Processing" kann, da keine Strahlumlenkung erforderlich ist, eine geringere Baugröße des 3D-Druckers bei zum DLP verfahren vergleichbarer Druckgeschwindigkeit erreicht werden. Gegenüber 3D-Druckern mit LCD-Displays kann aufgrund der erfindungsgemäßen Verwendung von Quantenpunkt-Leuchtdioden die Wärmeentwicklung im Bereich des Belichtungselementes auf ein solch geringes Maß reduziert werden, dass dadurch weder die Funktionsfähigkeit des Belichtungselementes noch der 3D-Druck als solches beeinträchtigt wird.

Die Erfindung hat weiterhin erkannt, dass für die in Zusammenhang mit 3D-Druck erforderliche Belichtung von Harz zum Aushärten regelmäßig geringe Wellenlängen, bspw. im blau-violetten Bereich des sichtbaren Lichts oder im UV-Bereich, erforderlich sind. Gerade in diesen Wellenlängenbereichen weisen organische Leuchtdioden (OLEDs), die man auf den ersten Blick als ebenfalls zur Bildung eines Belichtungselementes geeignet ansehen könnte, erhebliche Alterungseffekte auf, die bereits nach kurzem Betrieb eines damit ausgestatteten 3D-Druckers zu einer Reduktion der Druckqualität führen können. Es ist ein Verdienst der Erfindung, erkannt zu haben, dass für den speziellen Anwendungsfall des 3D-Drucks Quantenpunkt-Leuchtdioden besonders vorteilhaft sind, da sie deutlich weniger schnell altern als OLEDs.

Darüber hinaus wurde als Grundlage für die Erfindung erkannt, dass sich Quantenpunkt-Leuchtdioden grundsätzlich in der für das erfindungsgemäß vorgesehene Belichtungselement problemlos anordnen lassen und auch im für die Aushärtung von Harz erforderlichen Bereich herstellbar sind (vgl. bspw. J. Kwak et al.: High-Power Genuine Ultraviolet Light-Emitting Diodes Based On Colloidal Nanocrystal Quantum Dots - in Nano Letters, 2015, 15 (6), Seiten 3793-3799). Im Übrigen sei darauf hingewiesen, dass erfindungsgemäß Quantenpunkt-Leuchtdioden vorgesehen sind, also bei elektrischer Anregung selbstleuchtende Dioden, was sie von den vergleichbar einem LCD-Display das Licht einer Lichtquelle ändernde Anordnung von Quantenpunkten deutlich unterscheidet.

Im Übrigen gleicht der erfindungsgemäße 3D-Drucker im Wesentlichen bekannten 3D-Druckern. Der Abstand zwischen einer ebenen Aufbauplatte und dem Belichtungselement kann mithilfe einer Antriebseinheit schrittweise vergrößert werden, wobei bei jedem Schritt das zwischen Aufbauplatte und dem Belichtungselement befindliches Harz schichtweise ausgehend von der Aufbauplatte ausgehärtet wird, sodass sich schritt- bzw. schichtweise ein an der Aufbauplatte anhaftendes 3D-Modell ergibt.

Es ist bevorzugt, wenn das Belichtungselement monochromatisch ist. In anderen Worten sollen sämtliche Quantenpunkt-Leuchtdioden des Belichtungselements Strahlung in derselben Wellenlänge emittieren. Indem auf die für den 3D-Druck grundsätzlich ausreichende monochromatische Belichtung gesetzt wird, ist für jeden Belichtungspunkt des Belichtungselementes nur eine einzelne Quantenpunkt-Leuchtdiode erforderlich, was grundsätzlich eine höhere Auflösung ermöglicht als bei polychromatischer Ausgestaltung, bei der regelmäßig mehrere Leuchtdioden unterschiedlicher Emissionswellenlänge zu einem Belichtungspunkt zusammengefasst werden müssen.

Es ist bevorzugt, wenn die die Wellenlänge der vom Belichtungselement emittierten Strahlung kleiner gleich 450 nm, vorzugsweise kleiner gleich 410 nm, bspw. 405 nm, weiter vorzugsweise kleiner gleich 390 nm, bspw. 385 nm, ist. Insbesondere im letztgenannten UV-Bereich lassen sich Harze mit für den 3D-Druck sehr guten Aushärteeigenschaften herstellen.

Es ist bevorzugt, dass das im Reservoir des erfindungsgemäßen 3D-Druckers befindliche Harz auf die Wellenlänge(n) des Belichtungselementes abgestimmt ist, insbesondere also bei der vom Belichtungselement abgegebenen Wellenlänge aushärtet. Ist das Belichtungselement monochromatisch, lassen sich das Harz bzw. dessen Eigenschaften hinsichtlich des Aushärteverhaltens sehr gut auf das Belichtungselement abstimmen, was die Druckqualität erhöhen kann.

Es ist bevorzugt, wenn die Aufbauplatte im Reservoir angeordnet ist und das Belichtungselement von außen an einem transparenten Bereich des Harzreservoirs anliegt. Durch eine solche Anordnung wird sichergestellt, dass weder das Belichtungselement noch dessen elektrische Ansteuerung unmittelbar mit dem Harz in Kontakt kommt und dadurch beschädigt werden könnte.

Es ist bevorzugt, wenn das Belichtungselement aus mehreren Belichtungselementkacheln zusammengesetzt ist. Indem das Belichtungselement aus Belichtungselementkacheln zusammengesetzt ist, kann der Belichtungsbereich des Belichtungselementes durch das Hinzufügen weiterer Kacheln erweitert werden, ohne dass sich dadurch die Größe der Belichtungspunkte ändert. Vielmehr kann die Anzahl der Belichtungspunkte durch eine oder mehrere zusätzliche Kacheln nahezu beliebig erhöht werden, um so auch größere Objekte mit guter Auflösung drucken zu können. Selbstverständlich kann auch die Größe des Belichtungselementes nahezu beliebig gewählt werden.

Es ist bevorzugt, wenn die Belichtungspunkte des Belichtungselements eine Größe von maximal 70 µm, vorzugsweise von maximal 35 µm aufweisen. Die angegebene Länge bezieht sich dabei auf das für die jeweilige Form der Belichtungspunkte übliche Nennmaß, bei kreisförmigen Belichtungspunkten also der Durchmesser, bei quadratischen Belichtungspunkten eine Kantenlänge, bei rechteckigen Belichtungspunkten die Diagonallänge, usw.

Die Erfindung wird nun anhand einer vorteilhaften Ausführungsform unter Bezugnahme auf die beigefügte Zeichnung beispielhaft beschrieben. Es zeigt:

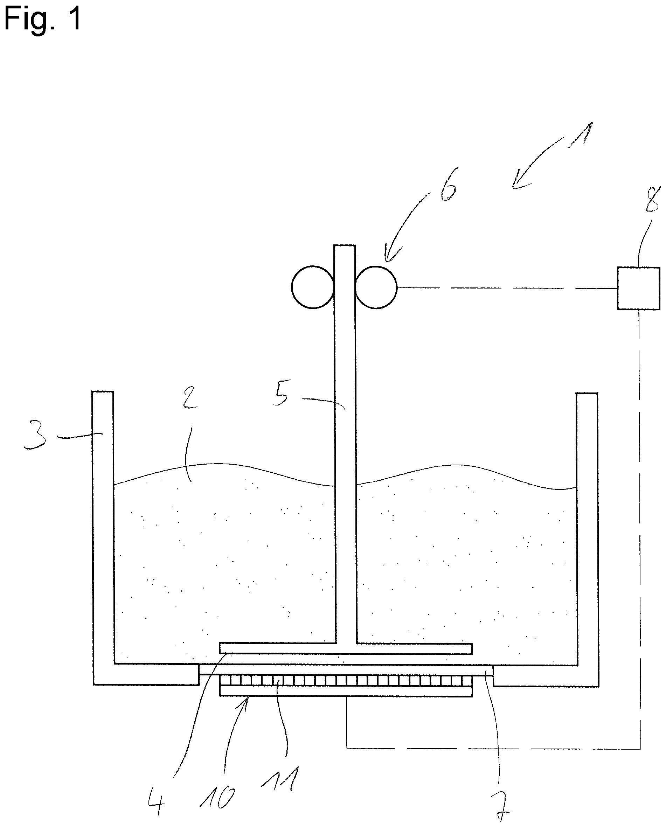

- Figur 1:: ein erstes Ausführungsbeispiel eines erfindungsgemäßen 3D-Druckers.

In Figur 1 ist ein erfindungsgemäßer 3D-Drucker 1 dargestellt. Der 3D-Drucker 1 umfasst ein mit Harz 2 gefülltes Reservoir 3. In diesem Reservoir 3 und eingetaucht in das Harz 2 ist eine horizontal ausgerichtete Aufbauplatte 4 angeordnet, die sich über ihre Aufhängung 5 und die Antriebseinheit 6 in vertikaler Richtung verfahren lässt.

Am Boden des Reservoirs 3 ist ein transparentes Fenster 7 vorgesehen, an der von außen ein Belichtungselement 10 anliegt. Das Belichtungselement ist dadurch parallel und gegenüberliegend zur Aufbauplatte 4 angeordnet, wobei sich der Abstand zwischen den beiden Elementen 4, 10 durch die Antriebseinheit 6 verändern lässt. Da sich die Aufbauplatte 4 im Reservoir 3 befindet, ist der an die Aufbauplatte 4 angrenzende Bereich zwischen Aufbauplatte 4 und Belichtungselement 10 - nämlich der Bereich zwischen Aufbauplatte 4 und Fenster 7 - immer mit Harz 2 gefüllt.

Das Belichtungselement 10 als zweidimensionale Matrix aus dicht nebeneinanderliegenden, einzeln ansteuerbaren Quantenpunkt-Leuchtdioden 11 ausgebildet, die allesamt eine Wellenlänge von 385 nm aufweisen, sodass das Belichtungselement 10 monochromatisch ist. Die Größe der quadratisch ausgebildeten Quantenpunkt-Leuchtdioden beträgt 35 µm, wobei sich das Maß in diesem Fall auf die Kantenlänge des Quadrats bezieht.

Die Antriebseinheit 6 sowie das Belichtungselement 10 werden durch die Steuerungseinheit 8 gesteuert.

Zum eigentlichen 3D-Druck wird ausgehend in der in Figur 1 dargestellten Position der Aufbauplatte 4 zunächst diejenigen Quantenpunkt-Leuchtdioden 11 des Belichtungselementes 10 angesteuert, um das Harz 2 an gewünschten Belichtungspunkten auszuhärten. Das Harz 2 ist dabei auf die Wellenlänge des Belichtungselementes 10 abgestimmt und härtet bei dessen Wellenlänge besonders gut und zuverlässig. Das ausgehärtete Harz 2 haftet an der Aufbauplatte 4 an. Ist die erste Schicht ausreichend ausgehärtet, wird die Aufbauplatte 4 durch die Antriebseinheit 6 um einen Schritt vertikal nach oben verfahren und das Harz wird erneut durch geeignetes Ansteuern des Belichtungselementes 10 ausgehärtet. Das in dieser Schicht ausgehärtete Harz 2 haftet an den im vorherigen Schritt ausgehärteten Punkten an. Schicht für Schicht kann so ein vollständiges 3D-Modell erzeugt werden.

## Patentansprüche

1. 3D-Drucker (1) umfassend eine ebene Aufbauplatte (4) und ein der Aufbauplatte (4) gegenüberliegendes, parallel dazu angeordnetes Belichtungselement (10), wobei der Abstand zwischen Aufbauplatte (4) und Belichtungselement (10) mithilfe einer Antriebseinheit (6) einstellbar ist und wobei die Aufbauplatte (4) und/oder das Belichtungselement (10) derart in einem mit Harz (2) gefüllten Reservoir (3) angeordnet ist, dass der an der Aufbauplatte (4) angrenzende Bereich zwischen Aufbauplatte (4) und Belichtungselement (10) von dem Harz (2) im Reservoir (3) eingenommen wird, **dadurch gekennzeichnet, dass**
das Belichtungselement (10) als zweidimensionale Matrix aus dicht nebeneinanderliegenden, einzeln ansteuerbaren Quantenpunkt-Leuchtdioden (11) gebildet ist, wobei die Quantenpunkt-Leuchtdioden (11) bei elektrischer Anregung selbstleuchtende Dioden sind.

2. 3D-Drucker nach Anspruch 1,
**dadurch gekennzeichnet, dass**
das Belichtungselement (10) monochromatisch ist.

3. 3D-Drucker nach Anspruch 1 oder 2,
**dadurch gekennzeichnet, dass**
die Wellenlänge der vom Belichtungselement (10) emittierten Strahlung kleiner gleich 450 nm, vorzugsweise kleiner gleich 410 nm, weiter vorzugsweise kleiner gleich 390 nm ist.

4. 3D-Drucker nach einem der Ansprüche,
**dadurch gekennzeichnet, dass**
das im Reservoir (3) enthaltene Harz (2) so gewählt ist, dass es bei Bestrahlung mit der vom Belichtungselement (10) abgegebenen Wellenlänge aushärtet.

5. 3D-Drucker nach einem der vorhergehenden Ansprüche,
**dadurch gekennzeichnet, dass**
die Aufbauplatte (4) im Reservoir (3) angeordnet ist und das Belichtungselement (10) von außen an einem transparenten Bereich (7) des Reservoirs (3) anliegt.

6. 3D-Drucker nach einem der vorhergehenden Ansprüche,
**dadurch gekennzeichnet, dass**
das Belichtungselement (10) aus mehreren Belichtungselementkacheln zusammengesetzt ist.

7. 3D-Drucker nach einem der vorhergehenden Ansprüche,
**dadurch gekennzeichnet, dass**
die Belichtungspunkte des Belichtungselements (10) eine Größe von maximal 70 µm, vorzugsweise von maximal 35 µm aufweisen.

## Claims

1. 3D printer (1), comprising a flat build-up plate (4) and, arranged opposite and parallel to the build-up plate (4), an exposure element (10), wherein the distance between the build-up plate (4) and the exposure element (10) is settable with the aid of a drive unit (6) and wherein the build-up plate (4) and/or the exposure element (10) is arranged in a reservoir (3) filled with resin (2) in such a way that the region adjoining the build-up plate (4) between the build-up plate (4) and the exposure element (10) is taken up by the resin (2) in the reservoir (3),
**characterized in that**
the exposure element (10) is a two-dimensional matrix made of individually controllable quantum dot light-emitting diodes (11) lying close next to one another, wherein the quantum dot light-emitting diodes (11) are diodes that are self-luminous when electrically excited.

2. 3D printer according to Claim 1,
**characterized in that**
the exposure element (10) is monochromatic.

3. 3D printer according to Claim 1 or 2,
**characterized in that**
the wavelength of the radiation emitted by the exposure element (10) is less than or equal to 450 nm, preferably less than or equal to 410 nm, more preferably less than or equal to 390 nm.

4. 3D printer according to one of the claims,
**characterized in that**
the resin (2) contained in the reservoir (3) is selected such that it cures when irradiated with the wavelength emitted by the exposure element (10).

5. 3D printer according to one of the preceding claims,
**characterized in that**
the build-up plate (4) is arranged in the reservoir (3) and the exposure element (10) rests against a transparent region (7) of the reservoir (3) from the outside.

6. 3D printer according to one of the preceding claims,
**characterized in that**
the exposure element (10) is composed of a plurality of exposure element tiles.

7. 3D printer according to one of the preceding claims,
**characterized in that**
the exposure points of the exposure element (10) have a size of at most 70 µm, preferably at most 35 µm.

## Revendications

1. Imprimante 3D (1) comprenant une plaque de montage plane (4) et un élément d'insolation (10) opposé à la plaque de montage (4) et disposé parallèlement à celle-ci, la distance entre la plaque de montage (4) et l'élément d'insolation (10) pouvant être réglée à l'aide d'une unité d'entraînement (6) et la plaque de montage (4) et/ou l'élément d'insolation (10) étant disposés dans un réservoir (3) rempli de résine (2) de manière à ce que la zone située entre la plaque de montage (4) et l'élément d'insolation (10) et adjacente à la plaque de montage (4) soit occupée par la résine (2) placée dans le réservoir (3),
**caractérisé en ce que**
l'élément d'insolation (10) est réalisé sous la forme d'une matrice bidimensionnelle de diodes électroluminescentes à points quantiques (11) pouvant être commandées individuellement et situées les unes contre les autres, les diodes électroluminescentes à points quantiques (11) étant des diodes auto-éclairantes lorsqu'elles sont excitées électriquement.

2. Imprimante 3D selon la revendication 1,
**caractérisée en ce que**
l'élément d'insolation (10) est monochromatique.

3. Imprimante 3D selon la revendication 1 ou 2,
**caractérisée en ce que**
la longueur d'onde du rayonnement émis par l'élément d'insolation (10) est inférieure ou égale à 450 nm, de préférence inférieure ou égale à 410 nm, plus préférablement inférieure ou égale à 390 nm.

4. Imprimante 3D selon l'une des revendications,
**caractérisée en ce que**
la résine (2) contenue dans le réservoir (3) est choisie pour durcir lorsqu'elle est irradiée avec la longueur d'onde émise par l'élément d'insolation (10).

5. Imprimante 3D selon l'une des revendications précédentes,
**caractérisée en ce que**
la plaque de montage (4) est disposée dans le réservoir (3) et l'élément d'insolation (10) est en appui contre une zone transparente (7) du réservoir (3) depuis l'extérieur.

6. Imprimante 3D selon l'une des revendications précédentes,
**caractérisée en ce que**
l'élément d'insolation (10) est composé d'une pluralité de dalles d'éléments d'insolation.

7. Imprimante 3D selon l'une des revendications précédentes,
**caractérisée en ce que**
les points d'insolation de l'élément d'insolation (10) ont une dimension de 70 µm maximum, de préférence de 35 µm maximum.
